# EUROPÄISCHE PATENTSCHRIFT

(11) **EP 1 056 982 B1**
(45) Veröffentlichungstag und Bekanntmachung des Hinweises auf die Patenterteilung: **22.05.2002**
(21) Anmeldenummer: 99914419.9
(22) Anmeldetag: 12.02.1999
(51) Int. Cl.: F28D 20/00

(54) **VORRICHTUNG ZUR SPEICHERUNG VON WÄRMEENERGIE**
DEVICE FOR STORING HEAT ENERGY
DISPOSITIF POUR LE STOCKAGE D'ENERGIE THERMIQUE

(30) Priorität: 17.02.1998 DE 19806534
(43) Veröffentlichungstag der Anmeldung: 06.12.2000
(73) Patentinhaber: Henkes, Christian, 55130 Mainz (DE)
(72) Erfinder: HENKES, Ferdinand, verstorben (DE)
(74) Vertreter: Becker, Bernd, Dipl.-Ing.
(86) Internationale Anmeldenummer: DE9900399
(87) Internationale Veröffentlichungsnummer: WO9942782

(56) Entgegenhaltungen:
- WO-A-81/00444
- DE-A- 3 402 438
- FR-A- 2 443 027
- FR-A- 2 524 125
- FR-A- 2 596 438
- PATENT ABSTRACTS OF JAPAN vol. 096, no. 007, 31. Juli 1996 (1996-07-31) -& JP 08 060759 A (TAISEI CORP;DOW KAKOH KK; LONSEAL CORP), 5. März 1996 (1996-03-05)
- PATENT ABSTRACTS OF JAPAN vol. 095, no. 010, 30. November 1995 (1995-11-30) -& JP 07 190290 A (ISHIKAWAJIMA HARIMA HEAVY IND CO LTD), 28. Juli 1995 (1995-07-28)

## Beschreibung

Die Erfindung betrifft eine Vorrichtung zur Langzeitspeicherung von Wärmeenergie mit
- einem Erdtank, dessen Wände eine Innenschicht, eine Außenschicht und eine zwischen Innen- und Außenschicht angeordnete wärmeisolierende Dämmschicht aufweisen, wobei die Dämmschicht aus starren Formteilen eines wärmeisolierenden Materials besteht und
- einer Beschickungseinrichtung zum Einleiten einer die zu speichernde Wärmeenergie enthaltenden Flüssigkeit in den Innenraum des Erdtanks und einer Entnahmeeinrichtung zum Leiten der Flüssigkeit aus dem Innenraum an einen Wärmeverbraucher.

Bevorzugtes, aber nicht ausschließliches Anwendungsgebiet der Erfindung ist die Speicherung von Energie, die als Strahlungs- und/oder Wärmeenergie aus der äußeren Umgebung eines Gebäudes mittels geeigneter Einrichtungen aufgenommen und zur Erwärmung eines flüssigen Mediums verwendet wird. Energiequelle für die Erwärmung der Flüssigkeit kann aber auch jegliche Art von Abwärme oder sogar Energie aus Feuerungsund sonstigen Kraftwerksanlagen aber auch aus Kälte- und Kühlanlagen sein. Auch im letztgenannten Fall kann die Möglichkeit einer Wärmespeicherung vorteilhaft sein, und zwar zu Pufferungszwecken, um eine diesbezügliche Anlage in Zeiten geringer Wärmeenergie-Nachfrage wirtschaftlich auszulasten und damit Reserven für Spitzenlastzeiten zu schaffen.

Zur Speicherung großer Wärmemengen sind Erdtanks besonders geeignet, da sie zum einen keinen Gebäuderaum beanspruchen und zum anderen weitgehend vor dem Einfluß von Winterkälte geschützt sind. Dennoch benötigen auch Erdtanks eine zusätzliche Wärmeisolierung, insbesondere wenn die Temperatur der Speicherflüssigkeit weit über derjenigen des Erdreichs liegt, so daß Wärmeverluste in das Erdreich zu befürchten sind. Bei einer aus der WO 81/00444 bekannten Vorrichtung der eingangs beschriebenen Art zur Speicherung von Wärmeenergie weist der Erdtank einen soliden Behälter aus Metall oder Kunststoff auf, an dessen Außenseite eine wärmedämmende Schicht aus Hartschaum direkt aufgeschäumt ist. Unmittelbar auf die Außenseite der Hartschaumschicht ist als Außenschicht ein Mantel aus mechanisch festem und wärmeleitfähigem Material, vorzugsweise aus Beton, aufgebracht, dem Füllstoffe zur Verbesserung der Wärmeleitfähigkeit zugemischt sind. Der Beton kann auch zur Aufnahme einer gewissen Feuchtigkeit porös ausgebildet sein. In dem Außenmantel sind Rohrleitungen eingebettet. Durch diese Rohrleitungen fließt während des Energieentnahmebetriebs die Rücklaufflüssigkeit vom Wärmeverbraucher, bevor sie in den Erdtank geleitet wird, so daß ein Teil der in das Erdreich gegangenen Verlustwärme des Tanks wieder aufgenommen wird.

Dieser bekannte Erdtank hat Nachteile. Er muß als Ganzes, einschließlich seiner wärmeisolierenden Umschäumung und seiner darüberliegenden Beton-Ummantelung, vorgefertigt werden, bevor er in die Erde versenkt werden kann. Eine Fertigung des die Innenschicht bildenden Metall- oder Kunststoffbehälters auf dem Gelände seiner Verwendung oder gar in der ausgehobenen Grube wäre problematisch, ebenso wie das Aufbringen der wärmeisolierenden Umschäumung. Ähnliches gilt auch für die äußere Beton-Ummantelung mit den darin eingebetteten Rohrleitungen. Für das Umschäumen ist ein apparativer Aufwand erforderlich und für das Herstellen der Beton-Ummantelung bedarf es Verschalungseinrichtungen, deren Einsatz am Ort der Installation des Tanks Komplikationen bringen könnte. Andererseits bringt es Transportprobleme, wenn der Tank im Werk vorgefertigt wird und zum Installationsort befördert werden muß. Aus diesem Grund eignen sich vorgefertigte Tanks nicht für Wärmespeicher großen Fassungsvermögens, wie sie etwa für Langzeitspeicher wünschenswert wären. Ein großes Fassungsvermögen ließe sich zwar durch Verendung mehrerer kleiner Tanks realisieren, was jedoch den Nachteil einer größeren Oberfläche und somit eines größeren Wärmeverlustes bringt.

Die DE 34 02 438 A1 beschreibt eine Speichervorrichtung mit einem Erdtank, dessen Wände eine Innenschicht, eine Außenschicht und eine dazwischen angeordnete Wärmedämmschicht aufweisen, und mit einer Beschickungs-/Entnahmeeinrichtung zum Einleiten und Ausleiten einer Wärmeträgerflüssigkeit, wobei die Wärmedämmschicht aus Blöcken, also starren Formteilen, aus wärmeisolierendem Material bestehen kann.

Die Aufgabe der vorliegenden Erfindung besteht darin, eine Vorrichtung zur Langzeitspeicherung von Wärmeenergie auszubilden, bei der die Installation des Erdtanks einfach möglich ist. Diese Aufgabe ist erfindungsgemäß bei einer Vorrichtung mit den Merkmalen des Anspruchs 1 gelöst. Vorteilhafte Ausgestaltungen und Weiterbildungen der erfindungsgemäßen Vorrichtung sind Gegenstand der Unteransprüche.

Gemäß der Erfindung ist eine Vorrichtung zur Langzeitspeicherung von Wärmeenergie vorgesehen, enthaltend einen Erdtank, dessen Wände eine Innenschicht, eine Außenschicht und eine zwischen Innen- und Außenschicht angeordnete wärmeisolierende Dämmschicht aufweisen, wobei die Dämmschicht aus starren Formteilen eines wärmeisolierenden Materials besteht, und eine Beschickungseinrichtung zum Einleiten einer die zu speichernde Wärmeenergie enthaltende Flüssigkeit in den Innenraum des Erdtanks und eine Entnahmeeinrichtung zum Leiten der Flüssigkeit aus dem Innenraum an einen Wärmeverbraucher. Die Formteile der Dämmschicht des Erdtanks stützen die Innenschicht und die Außenschicht unter Freihaltung von Luftkammern gegeneinander ab und sind profiliert, wobei die Vertiefungen des Profils die Luftkammern bilden und die Erhebungen des Profils distanzhaltende Stützen bilden.

Der erfindungsgemäße Aufbau der Formteile der Dämmschicht ermöglicht es, den Erdtank an Ort und Stelle aus vorgefertigten Elementen oder Baugruppen zusammenzusetzen. Die Formteile können einzeln oder in bereits teilweise zusammengesetzten und leicht transportierbaren Baugruppen an den Einsatzort befördert werden und dort in einer ausgehobenen Grube verlegt bzw. auf- oder aneinandergesetzt werden, ohne daß irgendwelche Schalungsmittel oder sonstige Stützeinrichtungen erforderlich wären. Einerseits sorgen die Formteile aufgrund ihres wärmeisolierenden Materials und infolge der von ihnen freihaltbaren Luftkammern für eine gute Wärmeisolierung, andererseits bilden sie infolge ihrer Starrheit ein stützendes Gerüst für die Innenschicht und die Außenschicht, die lediglich Dichtungszwecke zu erfüllen brauchen und deswegen äußerst dünn gehalten werden können. Die Formteile, insbesondere soweit sie zur Dämmschicht der Seitenwandung gehören, sind jeweils an aneinanderliegenden Flächen derart komplementär profiliert, daß eine relative Verschiebung benachbarter Formteile zueinander gehemmt wird. Dies stabilisiert die Dämmschicht bereits während ihres Zusammenbaus und erhöht auch die Stabilität der aus den zusammengefügten Formteilen gebildeten fertigen Struktur.

Die Zusammensetzung des Erdtanks aus starren Dämmschicht-Formteilen erlaubt eine optimale Anpassung des Tanks an die jeweiligen räumlichen Gegebenheiten und betrieblichen Erfordernisse. Geeignet vorgefertigte Formteile können zu Strukturen beliebiger Grundrißform und Größe zusammengebaut werden. Wärmespeichertanks großer Kapazität, etwa als Langzeitspeicher zum Sammeln der Sommerwärme für die Unterstützung winterlichen Heizbetriebs, können ebenso problemlos an Ort und Stelle installiert werden wie kleinere Tanks.

Während eine runde Grundrißform optimal zur Minimierung der Seitenwandoberfläche und somit des Wärmeverlustes ist, hat eine rechteckige Grundrißform den Vorteil, daß für Tanks verschiedener Größe jeweils gleiche Formteile verwendet werden können, in jeweils unterschiedlicher Anzahl. Eine derartige Normierung der Formteile verbilligt deren Herstellung.

In einer vorteilhaften Ausführungsform sind im Innenraum des Erdtanks Trennwände vorgesehen, die zum einen zur Abstützung der Deckenwand dienen und zum anderen den Innenraum in verschiedene Kammern unterteilen können, die eine zentrale Kernzone und eine umgebende Randzone bilden. Diese Zonen können getrennt betrieben werden, insbesondere hinsichtlich der Wärmeentnahme aus dem Speicher. In der Randzone wird die Speicherflüssigkeit wegen der Nähe der Außenwandung früher abkühlen und deswegen meist niedrigere Temperatur haben als die Speicherflüssigkeit in der Kernzone. Wenn das mittels des Wärmeverbrauchers zu erwärmende Medium relativ niedrige Temperatur hat, kann die Speicherflüssigkeit der Randzone ausgenutzt werden.

Vorteilhaft kann es auch sein, wenn in naher Umgebung des Erdtanks im Erdreich Leitungen verlegt sind, die von einer Flüssigkeit durchströmbar sind, welche die Umgebungswärme des Erdtanks aufnimmt.

Die Erfindung wird nachstehend an einem Ausführungsbeispiel anhand von Zeichnung näher erläutert, wobei diese Erläuterung zum besseren Verständnis der Erfindung dient und diese keinesfalls einschränken soll. Es zeigen:
- Fig. 1: eine schematische Darstellung einer Anlage, die eine erfindungsgemäße Vorrichtung zusammen mit einer Wärmequelle und einem Wärmeverbraucher enthält, wobei der Erdtank im Vertikalschnitt gezeigt ist;
- Fig. 2: den Vertikalschnitt durch den Erdtank in etwas vergrößertem Maßstab;
- Fig. 3: im gleichen Maßstab wie Fig. 2 einen Horizontalschnitt durch den Erdtank;
- Fig. 4: in wiederum vergrößertem Maßstab einen Vertikalschnitt durch einen seitlichen Randbereich des Erdtanks; und
- Fig. 5: im gleichen Maßstab wie Fig. 4 einen Eckbereich des Erdtanks im Horizontalschnitt.

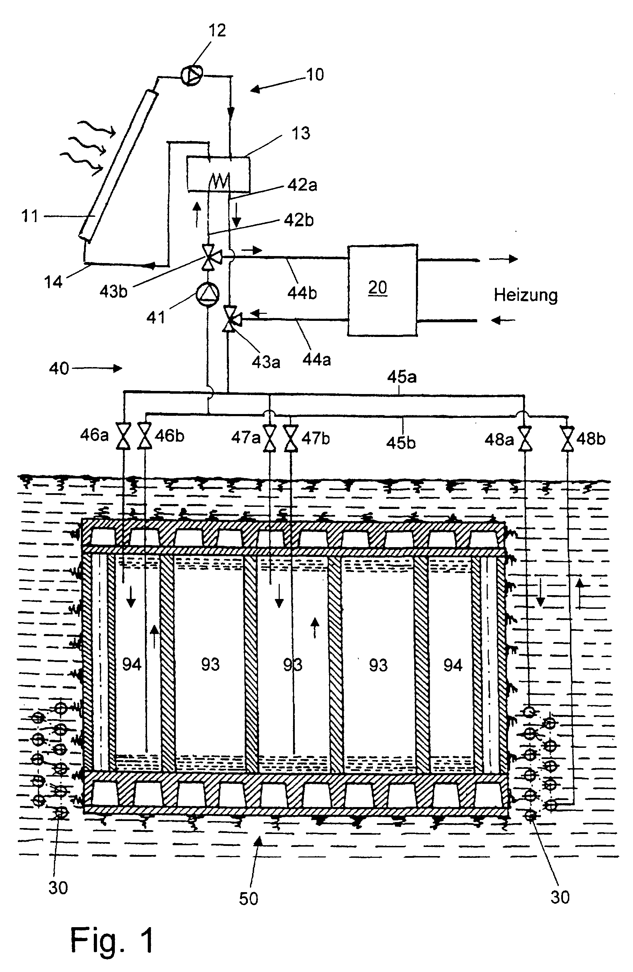

Es wird nun zunächst auf Fig. 1 Bezug genommen. Die dort dargestellte Anlage ist ein Beispiel für den Einsatz einer erfindungsgemäßen Vorrichtung zur Speicherung von Wärmeenergie. Die Anlage enthält eine von Solarenergie gespeiste Wärmequelle, die insgesamt mit der Bezugszahl 10 bezeichnet ist, einen Wärmeverbraucher 20 und einen Wärmespeicher in Form eines flüssigkeitsgefüllten Erdtanks 50. Die genannten Einrichtungen sind über ein Leitungssystem miteinander verbunden, das insgesamt mit 40 bezeichnet ist.

Die gezeigte Anlage kann z.B. konzipiert sein, um die Heizung eines Gebäudes zu übernehmen oder zumindest zu unterstützen. Hierzu enthält die Heizquelle 10 einen Wärmekollektor 11, der Strahlungs- und/oder Wärmeenergie aus der Umgebung des Gebäudes aufnimmt und an ein Strömungsmedium abgibt, das eine Flüssigkeit oder Luft sein kann. Im Falle der üblichen Sonnenkollektoren, welche die Strahlungsenergie der Sonne aufnehmen, ist dieses Medium üblicherweise Wasser. Es können aber auch Wärmekollektoren verwendet werden, die Sonneneinstrahlung und/oder Umgebungswärme des Gebäudes in einen Warmluftstrom umwandeln. Das durch den Kollektor 11 erwärmte Medium (Flüssigkeit oder Luft) wird über eine geeignete Fördereinrichtung (Pumpe oder Gebläse) 12 einem Wärmetauscher 13 zugeführt, worin aus dem Medium Wärmeenergie an einen zweiten Strömungskreislauf übertragen wird. Das abgekühlte Medium strömt aus dem Wärmetauscher 13 über eine Leitung 14 zurück zum Wärmekollektor 11, wo es erneut aufgeheizt wird.

Das über den Wärmetauscher 13 erwärmte Medium des zweiten Strömungskreislaufes ist eine Flüssigkeit, z.B. Wasser. Die Vorlaufleitung 42a vom Wärmetauscher 13 ist mit einem ersten Anschluß eines Umschaltventils 43a verbunden, dessen zweiter Anschluß mit der Rücklaufleitung 44a des Wärmeverbrauchers 20 und dessen dritter Anschluß mit einer Sammelleitung 45a verbunden ist. Die Rücklaufleitung 42b zum Wärmetauscher 13 ist mit einem ersten Anschluß eines zweiten Steuerventils 43b verbunden, dessen zweiter Anschluß mit der Vorlaufleitung 44b des Wärmeverbrauchers 20 und dessen dritter Anschluß über eine Pumpe 41 mit einer zweiten Sammelleitung 45b verbunden ist. Die erste Sammelleitung 45a ist über jeweils ein Schaltoder Steuerventil 46a bzw. 47a bzw. 48a mit Verbindungsleitungen für getrennte Zonen des Tanks 50 bzw. für ein außerhalb des Tanks 50 im Erdreich liegendes Leitungssystem 30 verbunden. Die zweite Sammelleitung 45b ist, ebenfalls über jeweils ein zugeordnetes Steuer- oder Schaltventil 46b bzw. 47b bzw. 48b mit Auslaßleitungen der betreffenden Zonen des Speichertanks 50 bzw. des Leitungssystems 30 verbunden.

Der Tank 50 ist mit der Flüssigkeit des zweiten, vom Wärmetauscher 13 erwärmbaren Strömungskreislaufes gefüllt, ebenso das Leitungssystem 30, dessen Funktion später noch beschrieben wird. Die Funktion des Tanks 50 besteht darin, die in Zeiten wirksamer Sonneneinstrahlung bzw. hoher Umgebungswärme vom Wärmekollektor 11 aufgenommene und mittels des Wärmetauschers 13 übertragene Energie zu speichern, um sie in Zeiten geringer oder fehlender Sonneneinstrahlung bzw. niedriger Umgebungstemperatur an den Wärmeverbraucher 20 zu Heizzwecken abzugeben. Hierzu kann der Wärmeverbraucher 20 ein Wärmetauscher oder vorzugsweise eine Wärmepumpe sein, um eine Raumheizung zu betreiben oder zu unterstützen.

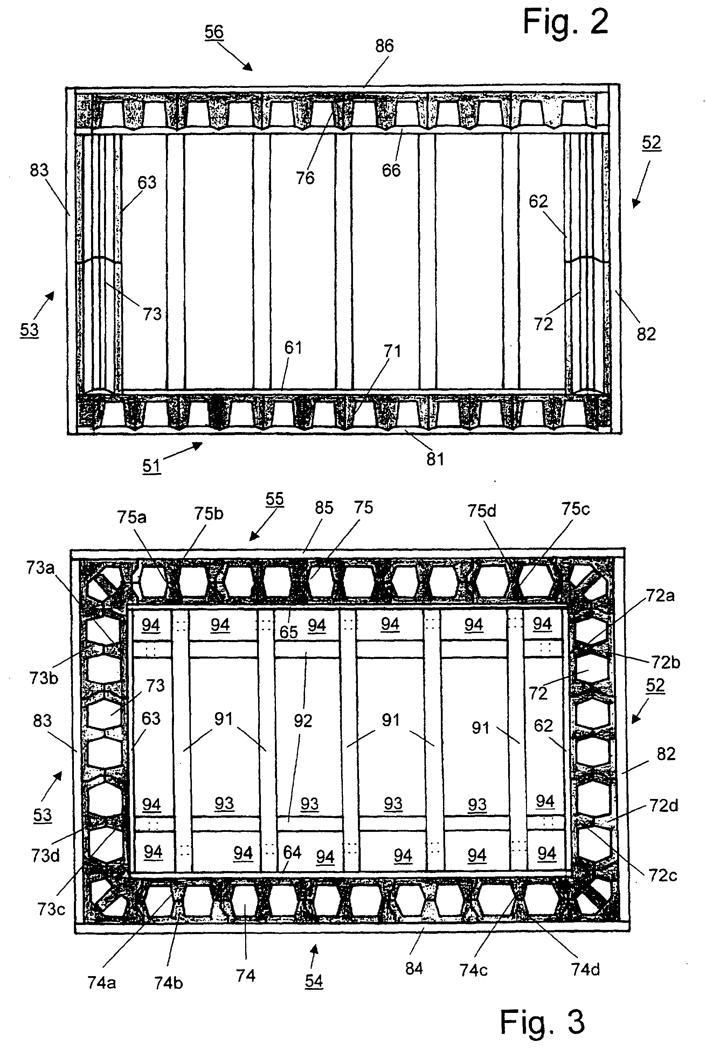

Bevor die Betriebsarten der in Fig. 1 dargestellten Anlage und der darin enthaltenen erfindungsgemäßen Vorrichtung erläutert werden, seien Aufbau und Einzelheiten des Speichertanks 50 anhand von Fig. 2 bis 5 beschrieben.

Der in Fig. 2 bis 5 dargestellte Speichertank ist eine Bauform in Gestalt eines Quaders mit einer rechteckigen Bodenwand 51, rechteckigen Seitenwänden 52, 53, 54 und 55 und einer rechteckigen Deckenwand 56. Jede dieser sechs Wände setzt sich zusammen aus drei Schichten, nämlich einer Innenschicht 61, 62, 63, 64, 65, 66, einer Außenschicht 81, 82, 83, 84, 85, 86 und einer dazwischenliegenden Dämmschicht 71, 72, 73, 74, 75, 76.

Die Dämmschichten sind jeweils durch nebeneinander- bzw. übereinanderliegende Formteile aus Kunststoffhartschaum gebildet, vorzugsweise Polyurethanschaum. Die Dämmschicht-Formteile haben unterschiedliche Gestalt, je nachdem, ob sie für die Bodenwand 51 und die Deckenwand 56, für die mittleren Bereiche der Seitenwände 52 bis 55 oder für die Eckbereiche zwischen den Seitenwänden verwendet werden. Gemeinsames Merkmal aller Dämmschicht-Formteile ist jedoch, daß sie zumindest auf einer Seite eine tief profilierte Oberfläche haben, wobei die Vertiefungen des Profils Luftkammern bilden und die Erhebungen des Profils distanzhaltende Stützen bilden, entweder zur Abstützung gegeneinander wie an den Seitenwänden 52-55 oder zur Abstützung auf der Außenschicht 81 der Bodenwand 51 bzw. der Innenschicht 66 der Deckenwand 56.

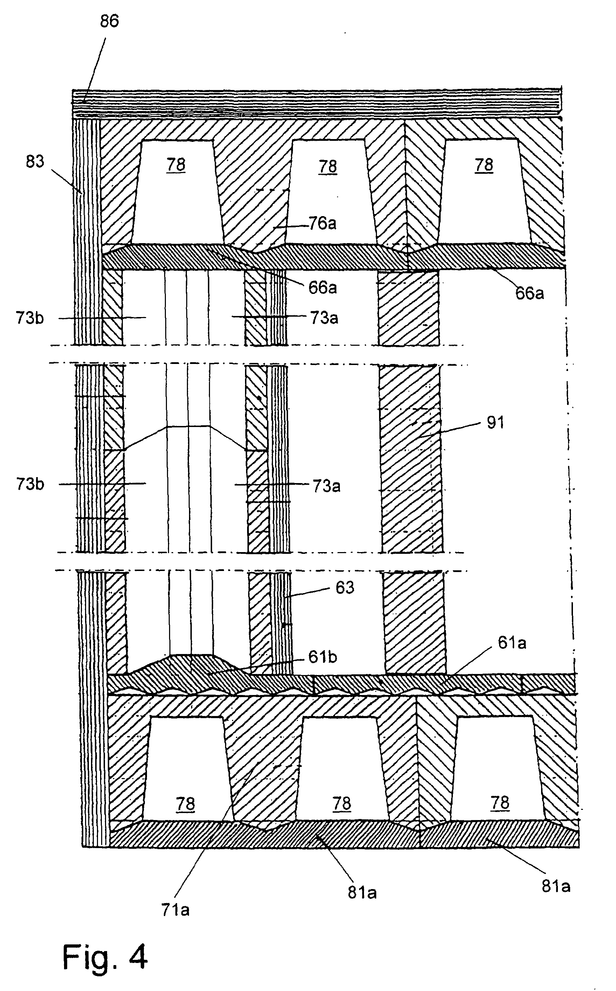

Beim dargestellten Ausführungsbeispiel besteht, wie in Fig. 4 verdeutlicht ist, die Dämmschicht 71 der Bodenwand aus nebeneinanderliegenden Hartschaum-Formteilen 71a mit jeweils drei nach unten weisenden Profilerhebungen, die sich mit ihren keilförmigen Enden in entsprechend keilförmigen Profilvertiefungen der darunterliegenden Außenschicht 81 abstützen. Die Formteile 71a erstrecken sich senkrecht zur Zeichenebene der Fig. 4 vom einen zum anderen Ende des Tanks, entweder einstückig oder in mehreren aneinandergelegten Exemplaren, wenn die Abmessung des Tanks in dieser Richtung sehr groß ist. Ähnliches gilt für die darunterliegende bodenseitige Außenschicht 81, für die Isolierplattenmaterial verwendet werden kann, vorzugsweise ebenfalls aus Kunststoffhartschaum wie etwa Polyurethanschaum, in Form nebeneinanderliegender und gegebenenfalls auch hintereinandergelegter Platten 81a. Zwischen den Profilerhebungen der Dämmschicht-Formteile 71a sind Luftkammern 78 gebildet.

Die Dämmschicht 76 der Deckenwand 56 besteht aus Formteilen 76a, die in Form, Material und Anordnung den Formteilen 71a der Bodenwand-Dämmschicht 71 entsprechen. Die keilförmig endenden Profilerhebungen der Formteile 76a stützen sich in entsprechend geformten Profilvertiefungen der Deckenwand-Innenschicht 66 ab, die ebenfalls aus nebeneinanderliegenden Platten 66a gebildet ist, welche in Form und Material den Platten 81a der Bodenwand-Außenschicht 81 entsprechen können.

Auf der Oberseite der Bodenwand-Dämmschicht 71 ist die Bodenwand-Innenschicht 61 in Form von Platten 61a, 61b verlegt, bei denen es sich um Grundmauerschutzplatten handeln kann, ebenfalls aus Kunststoffhartschaum, vorzugsweise Polyurethanschaum. Die am Rand liegende Innenschichtplatte 61b hat eine keilförmige Profilerhebung, deren Zweck später noch erläutert wird.

Die oben auf der Deckenwand-Dämmschicht 76 verlegte Deckenwand-Außenschicht 86 ist aus einem wasserundurchlässigen Material, z.B. einem bituminösen Drainageplattenmaterial, vorzugsweise bestehend aus Polyurethanschaumpartikeln mit Bitumen vermischt. Aus dem gleichen Material sind vorzugsweise auch die Seitenwand-Außenschichten 82, 83, 84, 85 gebildet.

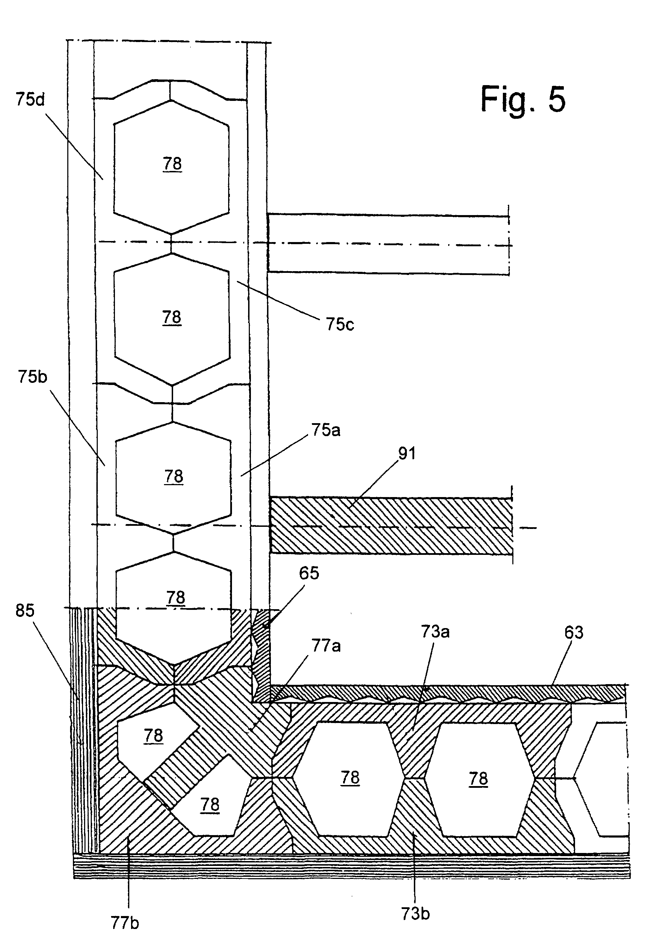

Die Dämmschichten 72, 73, 74, 75 der Seitenwände 52, 53, 54, 55 bestehen jeweils aus Hartschaum-Formteilen, deren Querschnittsform in Fig. 3 und 5 zu erkennen ist. Im einzelnen sei zunächst der Aufbau der Seitenwand 53 betrachtet.

Die Dämmschicht 73 dieser Seitenwand 53 setzt sich zusammen aus einer der Innenschicht 63 zugewandten ersten Lage von Formteilen 73a und einer der Außenschicht 83 zugewandten zweiten Lage von Formteilen 73b, wobei sich Profilerhebungen der Formteile 73a und 73b aufeinander abstützen, so daß die Profilvertiefungen der beiden Formteile 73a, 73b einander gegenüberliegen und Luftkammern 78 bilden. Einander benachbarte Formteile 73a berühren sich formschlüssig an Berührungsflächen, die zumindest teilweise nicht orthogonal zur Ebene der betreffenden Seitenwand verlaufen. Entsprechendes gilt für einander benachbarte Formteile 73b. Somit ergibt sich zwischen einander benachbarten Formteilen in der Seitenwand eine derartige Keilverzahnung, daß sich die Formteile gegenseitig gegen relative Verschiebung orthogonal zur Seitenwandung blockieren. Falls, wie in Fig. 2 und 4 dargestellt, die Seitenwand-Dämmschicht 73 aus mehreren übereinanderliegenden Lagen von Dämmschicht-Formteilen 73a, 73b gebildet ist, ist auch die Berührungsfläche zwischen jeweils übereinanderliegenden Formteilen zumindest abschnittsweise nicht orthogonal zur Ebene der Seitenwand, so daß sich auch hier eine Keilverzahnung ergibt. Für eine entsprechende Keilverzahnung ist schließlich auch zwischen der unteren Standfläche der untersten Dämmschicht-Formteile der Seitenwand und der Innenschicht 61 der Bodenwand 51 gesorgt, und zwar durch die bereits erwähnte Profilerhebung im Randelement 61b der Bodenwand-Innenschicht 61 und die dazu komplementäre Formgebung der unteren Standfläche der untersten Dämmschicht-Formteile der Seitenwand, wie am deutlichsten in Fig. 4 zu erkennen ist. Die Innenschicht 63 der Seitenwand 53 besteht vorzugsweise aus dem gleichen Material wie die Innenschicht 61 an der Bodenwand 51, nämlich aus Polyurethanschaum-Platten.

Die anderen Seitenwände 52, 54 und 55 sind in der gleichen Weise aufgebaut wie die vorstehend beschriebene Seitenwand 53, so daß sich hier eine nähere Beschreibung erübrigt.

An den vier Ecken, wo jeweils zwei Exemplare der Seitenwände 52, 53, 54, 55 zusammenstoßen, besteht die Dämmschicht aus besonderen Eck-Formteilen 77a, 77b, wie im Detail in der Fig. 5 dargestellt ist. In jeder Ecke befinden sich ein oder mehrere übereinanderliegende Formteile 77b erster Art, welche die Außenseite der Ecke definieren und jeweils eine breite, nach innen weisende Profilausnehmung haben, und ein oder mehrere Formteile 77a zweiter Art, welche die Innenseite der Ecke definieren, an den Formteilen 77b anliegen und mit jeweils einer schmalen Profilerhebung in die breite Profilausnehmung des betreffenden Formteils 77b stoßen, so daß auch in den Eckbereichen Luftkammern 78 in der Dämmschicht freigehalten werden. Die Eck-Formteile 77a, 77b bilden an ihren Berührungsflächen mit den Dämmschicht-Formteilen der jeweils benachbarten Seitenwände eine ähnliche Keilverzahnung wie die letztgenannten Formteile unter sich, d.h. die betreffenden Berührungsflächen sind zumindest abschnittsweise nicht-orthogonal zur Ebene der betreffenden Seitenwand.

Wenn die Eck-Formteile symmetrisch sind, wie im dargestellten Fall, können die Formteile in der Dämmschicht der Seitenwände nicht alle die gleiche Form haben. Wie in Fig. 3 und 5 erkennbar, muß innerhalb jeder Seitenwand die Form der seitlichen Keilverzahnung zwischen den Formteilen aus Symmetriegründen irgendwo ins Spiegelbildliche "umgedreht" werden. Dies wird durch jeweils ein Paßstück in der Reihe der Formteile innerhalb jeder Seitenwand erreicht. In Fig. 5 sind solche Paßstücke für die Seitenwand 55 dargestellt und mit 75c und 75d bezeichnet. Diese Paßstücke unterscheiden sich von den benachbarten Formteilen 75a und 75b **dadurch**, daß sie symmetrisch in bezug auf eine vertikale und zur Seitenwand orthogonale Ebene sind. Wie aus Fig. 3 ersichtlich, sind ähnliche Paßstücke auch in den anderen Seitenwänden 52, 53, 54 enthalten. Die Paßstücke können jedoch entfallen, wenn die Eck-Formteile 77a, 77b in passender Weise unsymmetrisch gestaltet sind.

Zur Installation des Erdtanks 50 wird zunächst in einer ausgeschachteten Grube die Bodenwand 81 verlegt, die über die gesamte Breite und Länge des Erdtanks reicht. Auf der Bodenwand 81 werden dann die Formteile 71a der Bodenwand-Dämmschicht angeordnet, und auf der Oberseite der so hergestellten Bodenwand-Dämmschicht wird die Bodenwand-Innenschicht 61 verlegt. Anschließend erfolgt der Aufbau der Seitenwand-Dämmschicht, indem die zugehörigen Formteile auf der Bodenwand-Innenschicht 61 aufgestellt werden, und zwar entlang deren Rändern. Anschließend werden die Innenseiten der Seitenwände 52, 53, 54, 55 mit der jeweiligen Innenschicht 62, 63, 64, 65 versehen.

In der so entstandenen Wanne werden dann vertikale Trennwände 91 und 92 in zueinander senkrechten Richtungen eingezogen, um eine Mehrzahl von innenliegenden Kammern 93 und Randkammern 94 zu bilden. Die Innenkammern 93 sind untereinander durch entsprechende Öffnungen 95 in den Trennwänden verbunden. Ebenso sind die Randkammern 94 durch entsprechende Öffnungen 96 in den Trennwänden miteinander verbunden. Die Innenkammern 93 bilden somit eine zusammenhängende Kernzone, während die Außenkammern 94 eine zusammenhängende Randzone bilden.

Auf den Oberkanten der Seitenwand-Dämmschichten 72, 73, 74, 75, der Seitenwand-Innenschichten 62, 63, 64, 65 und der Trennwände 91, 92 wird dann die Deckenwand-Innenschicht 66 verlegt, auf deren Oberseite die Formteile 76a der Deckenwand-Dämmschicht 76 angeordnet werden. Hierauf werden die Seitenwände 52, 53, 54, 55 mit der jeweiligen Außenschicht 82, 83, 84, 85 versehen, die jeweils vom unteren Rand der Bodenwand-Außenschicht 81 bis zum oberen Rand der Deckenwand-Dämmschicht 76 reicht. Im Anschluß daran wird die Außenschicht 86 der Deckenwand 56 aufgebracht.

Beim Zusammenbau werden die Fugen zwischen den Einzelteilen der Innen- und Außenschichten und auch der Trennwände mit Bitumen abgedichtet. Zwischen den Formteilen der Dämmschicht ist eine solche Abdichtung nicht notwendig, jedoch kann auch hier Bitumen eingebracht werden, um die besagten Formteile gewünschtenfalls besser zusammenzuhalten, insbesondere wenn mehrere Formteile bereits bei einer Vormontage vereinigt werden, was in vielen Fällen zweckmäßig ist.

Vor oder nach der Installation des Erdtanks 50 werden die umgebenden Rohrleitungen 30 verlegt, die vorzugsweise aus Kunststoffschlauch bestehen.

Die Kernzone 93 und die Randzone 94 des Tanks werden getrennt an die Sammelleitungen 45a, 45b angeschlossen. Im einzelnen führt von der Sammelleitung 45a über jeweils ein Ventil 46a bzw. 47a eine Zulaufleitung in den oberen Bereich der betreffenden Zone des Tanks 50, während aus dem unteren Bereich der Zonen jeweils eine Entnahmeleitung über ein zugeordnetes Ventil 46b bzw. 47b zur Sammelleitung 45b führt. In ähnlicher Weise ist das den Tank umgebende Rohrleitungssystem 30 über jeweils ein Zulaufventil 48a bzw. ein Entnahmeventil 48b an die Sammelleitungen 45a bzw. 45b angeschlossen. Einzelheiten der Leitungsdurchführung in der Deckenwand 56 des Tanks 50 und der zugeordneten Anschlußarmaturen sind aus Gründen der Übersichtlichkeit in den Zeichnungen nicht dargestellt. Es können hierzu herkömmliche Einrichtungen verwendet werden.

Bei hoher Umgebungswärme bzw. ausreichender Sonneneinstrahlung wird die in Fig. 1 dargestellte Anlage mit dem vorstehend beschriebenen Erdtank 50 im Ladebetrieb betrieben, um den Tank mit Wärmeenergie aufzuladen. Hierzu sind die Ventile 43a und 43b so eingestellt, daß die an der Vorlaufleitung 42a aus dem Wärmetauscher 13 austretende erwärmte Flüssigkeit zur Sammelleitung 45a gelangt und daß aus der Sammelleitung 45b Flüssigkeit über die Rücklaufleitung 42b in den Wärmetauscher 13 gepumpt wird, unter der Wirkung der Pumpe 41. Die Ventile 46a und 46b bzw. 47a und 47b werden abhängig von der Temperatur am Wärmetauscher 13 so gesteuert, daß der Flüssigkeitskreislauf bei hoher Temperatur über die Kernzone 93 und bei geringerer Temperatur über die Randzone 94 des Erdtanks 50 läuft. Dieser Ladebetrieb kann während der gesamten warmen Jahreszeit aufrechterhalten bleiben.

Der Entladebetrieb, bei welchem Wärmeenergie aus dem Tank 50 und auch aus dem Rohrleitungssystem 30 entnommen wird, erfolgt vorzugsweise während der Heizperiode. Bei dieser Betriebsart sind die Ventile 43a und 43b so eingestellt, daß die Pumpe 41 Flüssigkeit aus der Entnahme-Sammelleitung 45b zum Wärmeverbraucher 20 fördert, von wo es zurück in die Zulauf-Sammelleitung 45a gelangt. Je nach gemessener Außentemperatur bzw. Heizbedarf erfolgt dieser Entnahmebetrieb an der Kernzone 93, an der Randzone 94 oder am Leitungssystem 30 durch Öffnen der jeweils zugeordneten Ventilpaare 46a, 46b bzw. 47a, 47b bzw. 48a, 48b.

In der Kernzone 93 des Tanks 50 ist das wärmste Wasser z.B. in einem Temperaturbereich von 40 bis 45°C gespeichert. Die Randzone 94 bremst Wärmeverluste des Kernbereichs. Wärmeverluste zum Erdreich sind in der Randzone am höchsten. Der Temperaturbereich der Speicherflüssigkeit in dieser Zone ist z.B. 25 bis 30°C. Durch das außenliegende, im Erdreich verlegte Rohrleitungssystem 30 werden die Wärmeverluste des Speichers in das Erdreich zum Teil ausgenutzt. Die in diesem Rohrleitungssystem zirkulierende Flüssigkeit bewegt sich z.B. in einem Temperaturbereich von 8 bis 12°C.

Je größer der Erdtank 50 ist, desto größer ist natürlich seine Wärmespeicherkapazität und desto geringer sind seine Wärmeverluste, die hauptsächlich von der Flächengröße der Wände abhängen. Bei einem relativ kleinen Tank, dessen Decken- und Bodenfläche jeweils 25 m² betragen und dessen Seitenwandfläche insgesamt 77 m² beträgt, waren Wärmeverluste von 68 bzw. 54 kcal/h (285 bzw. 226 kJ/h) an Decke und Boden und von 150 kcal/h (627 kJ/h) an den Wänden zu beobachten, wobei die Anfangstemperatur der Decke 40°C, am Boden 30°C und an den Seitenwänden im Mittel 35°C betrug. Diese Wärmeverluste von insgesamt 270 kcal/h (1140 kJ/h) führten zu einem Wärmeverlust von 4,5% in 10 Tagen und von 14,0% in 30 Tagen.

Bei einem viel größeren Tank mit einer Decken- und Bodenfläche von jeweils 90 m² und einer Seitenwandfläche von insgesamt 145 m² betrug, bei gleichen Anfangstemperaturen wie im vorangegangenen Beispiel, der Wärmeverlust 720 kcal/h (3000 kJ/h), was zu einem Wärmeverluste von nur 2,5% in 10 Tagen und nur 7,5% in 30 Tagen führte. Diese Beispiele mögen zeigen, daß sich eine erfindungsgemäße Wärmespeichervorrichtung hervorragend zur Langzeitspeicherung von Wärmeenergie eignet.

## Patentansprüche

1. Vorrichtung zur Langzeitspeicherung von Wärmeenergie mit
- einem Erdtank (50), dessen Wände (51 bis 56) eine Innenschicht (61 bis 66), eine Außenschicht (81 bis 86) und eine zwischen Innen- und Außenschicht angeordnete wärmeisolierende Dämmschicht (71 bis 76) aufweisen, wobei die Dämmschicht (71 bis 76) aus starren Formteilen (71a, 72a bis 72d, 73a bis 73d, 74a bis 74d, 75a bis 75d, 76a, 77a, 77b) eines wärmeisolierenden Materials besteht und
- einer Beschickungseinrichtung (41, 42a, 42b) zum Einleiten einer die zu speichernde Wärmeenergie enthaltenden Flüssigkeit in den Innenraum (93, 94) des Erdtanks (50) und einer Entnahmeeinrichtung (41, 44a, 44b) zum Leiten der Flüssigkeit aus dem Innenraum an einen Wärmeverbraucher (20),
**dadurch gekennzeichnet, daß** die Formteile (71a, 72a bis 72d, 73a bis 73d, 74a bis 74d, 75a bis 75d, 76a, 77a, 77b) der Dämmschicht (71 bis 76) des Erdtanks (50)
- die Innenschicht (61 bis 66) und die Außenschicht (81 bis 86) unter Freihaltung von Luftkammern (78) gegeneinander abstützen und
- profiliert sind, wobei die Vertiefungen des Profils die Luftkammern (78) bilden und die Erhebungen des Profils distanzhaltende Stützen bilden.

2. Vorrichtung nach Anspruch 1, **dadurch gekennzeichnet, daß** der Erdtank (50) eine in horizontaler Ebene verlaufende Bodenwand (51), eine parallel hierzu verlaufende Deckenwand (56) und vertikale Seitenwandung (52-55) hat.

3. Vorrichtung nach Anspruch 2, **dadurch gekennzeichnet, daß** in der Bodenwand (51) die Formteile (71a) der Dämmschicht (71) an ihrer Unterseite profiliert sind, wobei sich die Enden der Profilerhebungen in entsprechend geformten Profilvertiefungen der Außenschicht (81) abstützen.

4. Vorrichtung nach Anspruch 2 oder 3, **dadurch gekennzeichnet, daß** in der Deckenwand (56) die Formteile (76a) der Dämmschicht (76) an ihrer Unterseite profiliert sind, wobei sich die Enden der Profilerhebungen in entsprechend geformten Profilvertiefungen der Innenschicht (66) abstützen.

5. Vorrichtung nach Anspruch 2 oder 3, **dadurch gekennzeichnet, daß** in der Bodenwand (51) und in der Deckenwand (56) die sich abstützenden Enden der Profilerhebungen der Dämmschicht-Formteile (71a, 76a) Keilflächen haben.

6. Vorrichtung nach einem der vorhergehenden Ansprüche, **dadurch gekennzeichnet, daß** sich einander benachbarte Formteile (72a-75a, 72c-75c; 72b-75b, 72d-75d) der Dämmschicht (72 bis 75) in der Seitenwandung (52-55) formschlüssig unter einer derartigen Keilverzahnung berühren, daß sie sich gegenseitig gegen relative Verschiebung orthogonal zur Seitenwandung blockieren.

7. Vorrichtung nach Anspruch 6, **dadurch gekennzeichnet, daß** in der Dämmschicht (72 bis 75) der Seitenwandung (52 bis 55) eine besagte Keilverzahnung zwischen den Berührungsflächen vertikal übereinanderliegender Formteile (72a-75a, 72c-75c; 72b-75b, 72d-75d) besteht.

8. Vorrichtung nach Anspruch 7, **dadurch gekennzeichnet, daß** die Bodenwand (51) bis an die Innenseite der Außenschicht (82 bis 85) der Seitenwandung (52 bis 55) reicht und daß eine besagte Keilverzahnung zwischen den unteren Standflächen der untersten Exemplare der Dämmschicht-Formteile (72a-75a, 72c-75c; 72b-75b, 72d-75d) der Seitenwandung (52 bis 55) und der Innenschicht (61) der Bodenwand (51) besteht.

9. Vorrichtung nach einem der Ansprüche 6 bis 8, d a - durch gekennzeichnet, daß in der Dämmschicht (72 bis 75) der Seitenwandung (52-55) eine besagte Keilverzahnung zwischen den Berührungsflächen horizontal nebeneinanderliegender Exemplare der Formteile (72a-75a, 72c-75c; 72b-75b, 72d-75d) besteht.

10. Vorrichtung nach einem der vorhergehenden Ansprüche, **dadurch gekennzeichnet, daß** die Dämmschicht (72 bis 75) der Seitenwandung (52-55) eine der Innenschicht (62 bis 65) zugewandte erste Lage von Formteilen (72a-75a, 72c-75c) und eine der Außenschicht (81-85) zugewandte zweite Lage von Formteilen (72b-75b, 72d-75d) aufweist, wobei Profilvertiefungen der Formteile der beiden Lagen einander gegenüberliegen und sich die Pofilerhebungen der Formteile der beiden Lagen aufeinander abstützen.

11. Vorrichtung nach einem der vorhergehenden Ansprüche, **dadurch gekennzeichnet, daß** der Erdtank (50) rechteckige Grundrißform hat.

12. Vorrichtung nach Anspruch 11, **dadurch gekennzeichnet, daß** in den Eckbereichen der Seitenwandung die Dämmschicht aus besonderen Eck-Formteilen (77a, 77b) besteht, die den Raum zwischen den Seitenrändern der Dämmschichten (72 bis 75) der jeweils zusammenstoßenden Seitenwände (52 bis 55) ausfüllen.

13. Vorrichtung nach Anspruch 12, **dadurch gekennzeichnet, daß** die Eck-Formteile (77a, 77b) ebenfalls zur Bildung von Luftkammern profiliert sind.

14. Vorrichtung nach einem der vorhergehenden Ansprüche, **dadurch gekennzeichnet, daß** die Formteile (71a, 72a-72d, 73a-73d, 74a-74d, 75a-75d, 76a, 77a, 77b) der Dämmschicht (71 bis 76) aus Hartschaum bestehen.

15. Vorrichtung nach einem der vorhergehenden Ansprüche, **dadurch gekennzeichnet, daß** die Außenschicht (81) der Bodenwand (51) und die Innenschicht (66) der Deckenwand (56) aus Isolierplattenmaterial, vorzugsweise Hartschaumplatten, bestehen.

16. Vorrichtung nach einem der vorhergehenden Ansprüche, **dadurch gekennzeichnet, daß** die Außenschicht (82 bis 86) der Seitenwandung (52 bis 55) und der Deckenwand (56) aus bituminösem Drainageplattenmaterial besteht, vorzugsweise aus wasserundurchlässigen Platten einer Hartschaum-Bitumen-Mischung.

17. Vorrichtung nach einem der vorhergehenden Ansprüche, **dadurch gekennzeichnet, daß** die Innenschicht (61 bis 66) der Deckenwand (56) und der Seitenwandung (52 bis 55) aus Grundmauerschutzplattenmaterial, vorzugsweise Hartschaumplatten, besteht.

18. Vorrichtung nach einem der vorhergehenden Ansprüche, **dadurch gekennzeichnet, daß** im Innenraum des Erdtanks (50) Trenn- und Stützwände (91, 92) vorgesehen sind.

19. Vorrichtung nach Anspruch 18, **dadurch gekennzeichnet, daß** die Trennwände (91, 92) den Innenraum in verschiedene Kammern unterteilen, die eine zentrale Kernzone (93) und eine umgebende Randzone (94) bilden, und daß für die Kernzone und die Randzone getrennte Einlaß- und Auslaßleitungen vorgesehen sind.

20. Vorrichtung nach Anspruch 19, **gekennzeichnet durch** Steuermittel (47a-47b, 46a-46b) zum selektiven Anschließen der Beschickungseinrichtung (41, 42a, 42b) und/oder der Entnahmeeinrichtung (41, 44a, 44b) an die Einlaß- bzw. Auslaßleitungen der Kernzone (93) und der Randzone (94).

21. Vorrichtung nach einem der vorhergehenden Ansprüche, **dadurch gekennzeichnet, daß** in naher Umgebung des Erdtanks (50) im Erdreich Leitungen (30) verlegt sind, die von einer Flüssigkeit durchströmbar sind, welche die Umgebungswärme des Erdtanks (50) aufnimmt.

22. Vorrichtung nach Anspruch 21 **gekennzeichnet durch** Steuermittel (48a-48b) zum wahlweisen Anschließen der Beschickungs- und/oder der Entnahmeeinrichtung (41, 42a, 42b; 41; 44a, 44b) an die im Erdreich verlegten Leitungen (30).

## Claims

1. Appliance for the long-term storage of heat energy having
- an underground tank (50), the walls (51 to 56) of which have an inner layer (61 to 66), an outer layer (81 to 86) and a heat-insulating layer (71 to 76) disposed between said inner and outer layers, the insulating layer (71 to 76) comprising rigid mouldings (71a, 72a to 72d, 73a to 73d, 74a to 74d, 75a to 75d, 76a, 77a, 77b) of a heat-insulating material and
- a feeding device (41, 42a, 42b) for introducing a fluid containing the heat energy to be stored into the interior (93, 94) of the underground tank (50) and a tapping device (41, 44a, 44b) for leading the fluid from the interior to a heat consumer (20),
**characterised in that**
the mouldings (71a, 72a to 72d, 73a to 73d, 74a to 74d, 75a to 75d, 76a, 77a, 77b) of the insulating layer (71 to 76) of the underground tank (50)
- support the inner layer (61 to 66) and the outer layer (81 to 86) against one another, keeping air chambers (78) free and
- are profiled, the depressions of the profile forming the air chambers (78) and the raised portions of the profile forming spacer supports.

2. Appliance according to claim 1, **characterised in that** the underground tank (50) has a base wall (51) extending in a horizontal plane, a roof wall (56) extending parallel to same and vertical side walls (52-55).

3. Appliance according to claim 2, **characterised in that** in the base wall (51), the mouldings (71a) of the insulating layer (71) are profiled on their underside, the ends of the raised profile portions being supported in correspondingly shaped profile depressions of the outer layer (81).

4. Appliance according to claim 2 or 3, **characterised in that** in the roof wall (56), the mouldings (76a) of the insulating layer (76) are profiled on their underside, the ends of the raised profile portions being supported in correspondingly shaped profile depressions of the inner layer (66).

5. Appliance according to claim 2 or 3, **characterised in that** in the base wall (51) and in the roof wall (56), the supported ends of the raised profile portions of the insulating layer mouldings (71a, 76a) have wedge-shaped surfaces.

6. Appliance according to one of the preceding claims, **characterised in that** adjacent mouldings (72a-75a, 72c-75c; 72b-75b, 72d-75d) of the insulating layer (72 to 75) touch one another in the side walls (52-55) in a form-locking manner, with a splining of such a kind that they block one another from relative displacement orthogonally with respect to the side walls.

7. Appliance according to claim 6, **characterised in that** in the insulating layer (72 to 75) of the side walls (52 to 55), said type of splining exists between the touching surfaces of mouldings (72a-75a, 72c-75c; 72b-75b, 72d-75d) lying vertically the one above the other.

8. Appliance according to claim 7, **characterised in that** the base wall (51) extends as far as the inner side of the outer layer (82 to 85) of the side walls (52 to 55), and **in that** said type of splining exists between the lower supporting faces of the lowermost mouldings (72a-75a, 72c-75c; 72b-75b, 72d-75d) of the insulating layer of the side walls (52 to 55) and the inner layer (61) of the base wall (51).

9. Appliance according to one of claims 6 to 8, **characterised in that** in the insulating layer (72 to 75) of the side walls (52-55), said type of splining exists between the touching surfaces of mouldings (72a-75a), 72c-75c; 72b-75b, 72d-75d) lying beside one another horizontally.

10. Appliance according to one of the preceding claims, **characterised in that** the insulating layer (72 to 75) of the side walls (52-55) has a first layer of mouldings (72a-75a, 72c-75c) facing the inner layer (62 to 65) and a second layer of mouldings (72b-75b, 72d-75d) facing the outer layer (81-85), profile depressions of the mouldings of the two layers lying opposite one another, and the raised profile portions of the mouldings of the two layers being supported on one another.

11. Appliance according to one of the preceding claims, **characterised in that** the underground tank (50) has a rectangular ground plan.

12. Appliance according to claim 11, **characterised in that** in the corner regions of the side walls, the insulating layer comprises special corner mouldings (77a, 77b) which fill the space between the side edges of the insulating layers (72 to 75) of the respectively abutting side walls (52 to 55).

13. Appliance according to claim 12, **characterised in that** the corner mouldings (77a, 77b) are also profiled to form air chambers.

14. Appliance according to one of the preceding claims, **characterised in that** the mouldings (71a, 72a-72d, 73a-73d, 74a-74d, 75a-75d, 76a, 77a, 77b) of the insulating layer (71 to 76) consist of rigid foam.

15. Appliance according to one of the preceding claims, **characterised in that** the outer layer (81) of the base wall (51) and the inner layer (66) of the roof wall (56) consist of insulating board material, preferably rigid-foam panels.

16. Appliance according to one of the preceding claims, **characterised in that** the outer layer (82 to 86) of the side walls (52 to 55) and of the roof wall (56) consist of bituminous drainage-board material, preferably of watertight panels of a rigid-foam/bitumen mixture.

17. Appliance according to one of the preceding claims, **characterised in that** the inner layer (61 to 66) of the roof wall (56) and of the side walls (52 to 55) consists of foundation-wall protection board material, preferably rigid-foam panels.

18. Appliance according to one of the preceding claims, **characterised in that** partition and support walls (91, 92) are provided in the interior of the underground tank (50).

19. Appliance according to claim 18, **characterised in that** the partition walls (91, 92) subdivide the interior into various chambers which form a central core area (93) and a surrounding edge area (94), and **in that** separate inflow and outflow lines are provided for the core area and the edge area.

20. Appliance according to claim 19, **characterised by** control means (47a-47b, 46a-46b) for selectively connecting the feeding device (41, 42a, 42b) and/or the tapping device (41, 44a, 44b) to the inflow or respectively outflow lines of the core area (93) and of the edge area (94).

21. Appliance according to one of the preceding claims, **characterised in that** in the close vicinity of the underground tank (50), lines (30) are laid in the ground through which can flow a fluid which absorbs the ambient heat of the underground tank (50).

22. Appliance according to claim 21, **characterised by** control means (48a-48b) for alternatively connecting the feeding device and/or the tapping device (41, 42a, 42b; 41; 44a, 44b) to the lines (30) laid in the ground.

## Revendications

1. Dispositif pour le stockage de longue durée d'énergie thermique avec
- un réservoir enterré (50) dont les parois (51 à 56) comportent une couche intérieure (61 à 66), une couche extérieure (81 à 86) et une couche isolante calorifuge (71 à 76) disposée entre les couches intérieure et extérieure, la couche isolante (71 à 76) étant constituée de pièces moulées rigides (71a, 72a à 72d, 73a à 73d, 74a à 74d, 75a à 75d, 76a, 77a, 77b) d'un matériau calorifuge et
- un dispositif d'alimentation (41, 42a, 42b) pour introduire un liquide contenant l'énergie thermique à stocker dans l'espace intérieur (93, 94) du réservoir enterré (50) et un dispositif de prélèvement (41, 44a, 44b) pour conduire le liquide de l'espace intérieur à un consommateur de chaleur (20),
**caractérisé en ce que** les pièces moulées (71a, 72a à 72d, 73a à 73d, 74a à 74d, 75a à 75d, 76a, 77a, 77b) de la couche isolante (71 à 76) du réservoir enterré (50)
- soutiennent la couche intérieure (61 à 66) et la couche extérieure (81 à 86) l'une par rapport à l'autre en ménageant des chambres d'air (78) et
- sont profilées, les creux du profil formant les chambres d'air (78) et les reliefs du profil formant des supports d'entretoisement.

2. Dispositif selon la revendication 1, **caractérisé en ce que** le réservoir enterré (50) a une paroi de fond (51) s'étendant dans un plan horizontal, une paroi de plafond (56) s'étendant parallèlement à celle-ci et des parois latérales verticales (52-55).

3. Dispositif selon la revendication 2, **caractérisé en ce que**, dans la paroi de fond (51), les pièces moulées (71a) de la couche isolante (71) sont profilées sur leur dessous, les extrémités des reliefs de profil prenant appui dans des creux de profil de configuration correspondante de la couche extérieure (81).

4. Dispositif selon la revendication 2 ou 3, **caractérisé en ce que**, dans la paroi de plafond (56), les pièces moulées (76a) de la couche isolante (76) sont profilées sur leur dessous, les extrémités des reliefs de profil prenant appui dans des creux de profil de configuration correspondante de la couche intérieure (66).

5. Dispositif selon la revendication 2 ou 3, **caractérisé en ce que**, dans la paroi de fond (51) et dans la paroi de plafond (56), les extrémités en appui des reliefs de profil des pièces moulées de couche isolante (71a, 76a) ont des surfaces en coin.

6. Dispositif selon l'une des revendications précédentes, **caractérisé en ce que** des pièces moulées voisines les unes des autres (72a-75a, 72c-75c ; 72b-75b, 72d-75d) de la couche isolante (72 à 75) dans les parois latérales (52-55) se touchent par complémentarité de formes selon un emboîtement conique, de sorte qu'elles se bloquent mutuellement en s'opposant à un déplacement relatif perpendiculairement aux parois latérales.

7. Dispositif selon la revendication 6, **caractérisé en ce qu'**il existe, dans la couche isolante (72 à 75) des parois latérales (52 à 55), un tel emboîtement conique entre les surfaces de contact de pièces moulées superposées verticalement (72a-75a, 72c-75c ; 72b-75b, 72d-75d).

8. Dispositif selon la revendication 7, **caractérisé en ce que** la paroi de fond (51) s'étend jusqu'au côté intérieur de la couche extérieure (82 à 85) des parois latérales (52 à 55), et **en ce qu'**il existe un tel emboîtement conique entre les faces d'appui inférieures des exemplaires les plus inférieurs des pièces moulées de couche isolante (72a-75a, 72c-75c ; 72b-75b, 72d-75d) des parois latérales (52 à 55) et la couche intérieure (61) de la paroi de fond (51).

9. Dispositif selon l'une des revendications 6 à 8, **caractérisé en ce qu'**il existe, dans la couche isolante (72 à 75) des parois latérales (52-55), un tel emboîtement conique entre les surfaces de contact d'exemplaires accolés horizontalement des pièces moulées (72a-75a, 72c-75c ; 72b-75b, 72d-75d).

10. Dispositif selon l'une des revendications précédentes, **caractérisé en ce que** la couche isolante (72 à 75) des parois latérales (52-55) comporte une première rangée de pièces moulées (72a-75a, 72c-75c) tournée vers la couche intérieure (62 à 65) et une seconde rangée de pièces moulées (72b-75b, 72d-75d) tournée vers la couche extérieure (81-85), les creux de profil des pièces moulées des deux rangées se faisant face et les reliefs de profil des pièces moulées des deux rangées prenant appui les uns sur les autres.

11. Dispositif selon l'une des revendications précédentes, **caractérisé en ce que** le réservoir enterré (50) a, en projection horizontale, une forme rectangulaire.

12. Dispositif selon la revendication 11, **caractérisé en ce que**, dans les zones de coin des parois latérales, la couche isolante est constituée de pièces moulées de coin spéciales (77a, 77b) qui occupent l'espace entre les bords latéraux des couches isolantes (72 à 75) des parois latérales mutuellement jointives (52 à 55).

13. Dispositif selon la revendication 12, **caractérisé en ce que** les pièces moulées de coin (77a, 77b) sont elles aussi profilées pour former des chambres d'air.

14. Dispositif selon l'une des revendications précédentes, **caractérisé en ce que** les pièces moulées (71a, 72a-72d, 73a-73d, 74a-74d, 75a-75d, 76a, 77a, 77b) de la couche isolante (71 à 76) sont constituées de mousse dure.

15. Dispositif selon l'une des revendications précédentes, **caractérisé en ce que** la couche extérieure (81) de la paroi de fond (51) et la couche intérieure (66) de la paroi de plafond (56) sont constituées de matériau isolant en plaques, de préférence de plaques en mousse dure.

16. Dispositif selon l'une des revendications précédentes, **caractérisé en ce que** la couche extérieure (82 à 86) des parois latérales (52 à 55) et de la paroi de plafond (56) est constituée de plaques de drainage en matériau bitumineux, de préférence de plaques imperméables d'un mélange mousse dure-bitume.

17. Dispositif selon l'une des revendications précédentes, **caractérisé en ce que** la couche intérieure (61 à 66) de la paroi de plafond (56) et des parois latérales (52 à 55) est constituée de matériau en plaques de protection pour soubassements, de préférence de plaques en mousse dure.

18. Dispositif selon l'une des revendications précédentes, **caractérisé en ce que** dans l'espace intérieur du réservoir enterré (50) sont prévues des cloisons séparatrices et porteuses (91, 92).

19. Dispositif selon la revendication 18, **caractérisé en ce que** les cloisons séparatrices (91, 92) divisent l'espace intérieur en différentes chambres qui forment une zone de coeur centrale (93) et une zone de bord périphérique (94), et **en ce que** des conduites d'entrée et de sortie séparées sont prévues pour la zone de coeur et pour la zone de bord.

20. Dispositif selon la revendication 19, **caractérisé par** des moyens de commande (47a-47b, 46a-46b) pour raccorder sélectivement le dispositif d'alimentation (41, 42a, 42b) et/ou le dispositif de prélèvement (41, 44a, 44b) aux conduites d'entrée et, respectivement, de sortie de la zone de coeur (93) et de la zone de bord (94).

21. Dispositif selon l'une des revendications précédentes, **caractérisé en ce que** dans l'environnement proche du réservoir enterré (50) sont posées, dans la terre, des conduites (30) qui peuvent être parcourues par un liquide qui capte la chaleur environnante du réservoir enterré (50).

22. Dispositif selon la revendication 21, **caractérisé par** des moyens de commande (48a-48b) pour raccorder sélectivement le dispositif d'alimentation et/ou le dispositif de prélèvement (41, 42a, 42b ; 41 ; 44a, 44b) aux conduites (30) posées dans la terre.
